Europäisches Patentamt

European Patent Office

Office européen des brevets

(11) Publication number: **0 473 945 A2**

# EUROPEAN PATENT APPLICATION

(21) Application number: **91113033.4**

(22) Date of filing: **02.08.91**

(51) Int. Cl.5: **G01S 11/12**

(30) Priority: **04.09.90 JP 234683/90**

(43) Date of publication of application:
**11.03.92 Bulletin 92/11**

(84) Designated Contracting States:
**DE FR GB**

(71) Applicant: **MITSUBISHI DENKI KABUSHIKI KAISHA**
**2-3, Marunouchi 2-chome Chiyoda-ku**
**Tokyo(JP)**

(72) Inventor: **Asayama, Yoshiaki, c/o Mitsubishi Denki K. K.**
**Himeji-Works, 840, Chiyoda-cho**
**Himeji-shi, Hyogo(JP)**

(74) Representative: **Lehn, Werner, Dipl.-Ing. et al**
**Hoffmann, Eitle & Partner Patentanwälte**
**Arabellastrasse 4**
**W-8000 München 81(DE)**

(54) **Apparatus for detecting distance between cars.**

(57) An apparatus for detecting the distance between cars capable of continuously measuring the distance up to an object once the object is determined even if it is moving as far as it is within the visual field of the apparatus, of making distinguishable which one of the preceding cars is the object intended for the measurement of the distance thereto even though there exist a plurality of cars traveling ahead, and of simultaneously measuring the distance to another car traveling in parallel to the preceding car.

*FIG. 1*

EP 0 473 945 A2

## BACKGROUND OF THE INVENTION

The present invention relates to an apparatus for detecting the distance between a preceding car and one's own car optically and continuously by image sensors.

Japanese Examined Patent Publication Nos. Sho-63-38085 (1988) and Sho-63-46363 (1988) and the like disclose apparatus for optically detecting the distance between cars going in the same direction by image sensors.

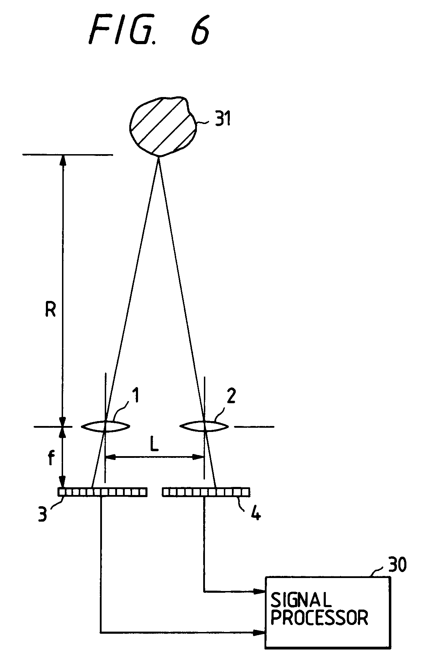

In these Japanese Publications, it has been proposed to employ a pair of left- and right-hand optical systems as shown in Fig. 6, these left- and right-hand optical systems having respective lenses 1 and 2 that are arranged apart by a base length of L.

There are also provided discrete image sensors 3 and 4 at the respective positions of focal length f of the lenses 1 and 2 and a signal processor 30 for sequentially shifting the picture signals given from the image sensors 3 and 4 in order to electrically superpose them. A distance R up to an object 31 is obtained from the shift quantity $\ell$ taken when the two picture signals become best synchronized on the principle of triangulation in terms of

$$R = \frac{f \cdot L}{\ell}.$$

On the other hand, Japanese Examined Patent Publication No. Sho-60-33352 (1985) discloses a technique of tracking the preceding car image picked up by image sensors or the like.

According to the above Publication, a target is tracked by an operator who is to set a tracking gate (window) encompassing the target thus tracked on a display screen while watching the display screen.

The conventional apparatus for detecting the distance between cars so arranged as described above make it possible to measure only the distance to the object which exists in the direction of optical axis of such an apparatus.

To measure the distance up to a moving object with the conventional apparatus mounted on one's own car when the distance to the preceding car going in the same direction is measured, for instance, the optical axis of the apparatus has to be adjusted to that direction.

As the distance to the object is measured by comparing the images picked up by the pair of left- and right-hand optical systems, the problem is that when it is attempted to measure the distance to the preceding car as described above and if another car is going on the left or right of the preceding car in parallel, the driver will unable to perceive which one of the cars is intended for the measurement of the distance thereto.

## SUMMARY OF THE INVENTION

An object of the present invention is to solve the foregoing problems by providing an apparatus for detecting the distance between cars capable of continuously measuring the distance up to an object once the object is determined even if it is moving as far as it is within the visual field of the apparatus, of making distinguishable which one of the preceding cars is the object intended for the measurement of the distance thereto even though there exist a plurality of cars traveling ahead, and of simultaneously measuring the distance to another car traveling in parallel to the preceding car.

An apparatus for detecting the distance between cars according to the present invention comprises two image sensors capable of imaging a wide visual field covering a preceding car, the sensor being arranged apart in the vertical direction, a display means for displaying the preceding car image picked up by either upper or lower image sensor, an image tracking device for tracking the preceding car image using a first window encompassing the preceding car image, and a distance computing means for computing the distance to an object encompassed by a second window set adjacent to the first window.

The image sensors according to the present invention are used for imaging a preceding car in a wide visual field including the preceding car in order for that preceding car image picked up by the upper and lower image sensors to be displayed on the display means. The distance computing means is so operated as to encompass the preceding car image in the first window and then the image tracking means is employed for tracking the preceding car image to detect the shifting of the upper picture signal from the corresponding lower one, with the picture signal in the first window as a reference signal, whereby the distance between one's own car and the preceding car is computed. Simultaneously with the picture signal in the second window as a reference signal, the shifting of the upper picture signal from the corresponding lower one is detected, whereby the distance to the object encompassed by the second window is computed.

## BRIEF DESCRIPTION OF THE DRAWINGS

Fig. 1 is a block diagram illustrating the constitution of an apparatus for detecting the distance between cars as an embodiment of the present invention;

Fig. 2 is a diagram illustrating a state such that a preceding car image is entering the display screen in the embodiment of Fig. 1;

Fig. 3 is a diagram illustrating a state such that the preceding car image has completely entered the first window in the embodiment of Fig. 1;

Figs. 4A and 4B are diagrams illustrating a picture area in the other memory corresponding to a reference picture signal in the first window in the embodiment of Fig. 1;

Figs. 5A and 5B are diagrams illustrating the picture area to be compared with a picture in the second window in the embodiment of Fig. 1; and

Fig. 6 is a block diagram illustrating the constitution of a conventional apparatus for detecting the distance between cars.

## DESCRIPTION OF THE PREFERRED EMBODIMENT

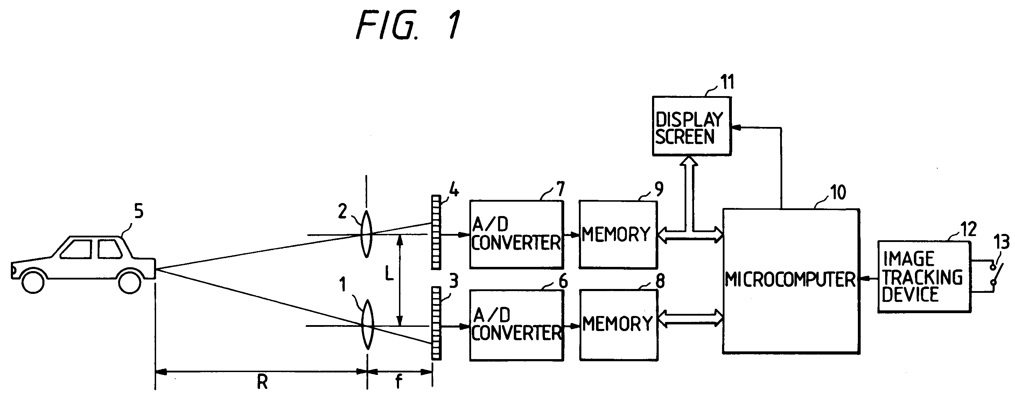

A description will subsequently be given of an embodiment of an apparatus for detecting the distance between cars with reference to the accompanying drawings. Fig. 1 is a block diagram illustrating the constitution of an embodiment. In Fig. 1, like reference characters designate like elements of Fig. 6.

As shown in Fig. 1, lenses 1 and 2, which are arranged apart by a base length of L, respectively form an upper and a lower optical system with tow-dimensional image sensors 3 and 4 corresponding to the respective lenses 1 and 2, the image sensors 3 and 4 being provided at the respective positions of focal length f of the lenses 1 and 2.

Numerals 6 and 7 represent analog/digital converters (hereinafter called A/D) for digitalizing the picture signals picked up by the image sensors 3 and 4, respectively.

The outputs of the A/D converters 6 and 7 are stored in respective memories 8 and 9, the writing and reading of data to and from the memories 8 and 9 being controlled by a microcomputer 10 as a distance computing means.

The image picked up by the image sensor 4 is displayed on a display screen 11 by means of the data read from the memory 9. The display screen 11 is used as a display means and controlled by the microcomputer 10.

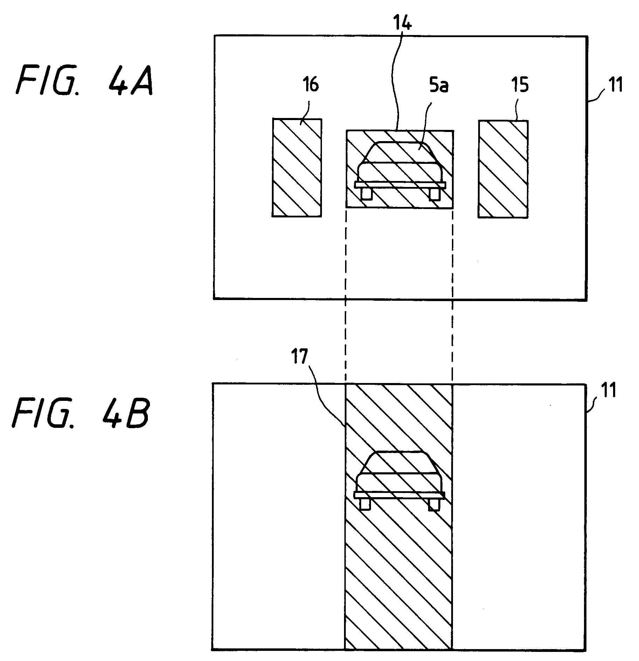

Numeral 12 designates an image tracking device. As shown in Fig. 3, the image tracking device 12 forms on the display screen 11 a first window 14 for use in tracking a preceding car image 5a, a second and a third window 15 and 16 adjacent to the first window 14 and operates to track the preceding car image 5a encompassed with the first window 14.

An image tracking instruction switch 13 in Fig.

1 is operated by the driver involved.

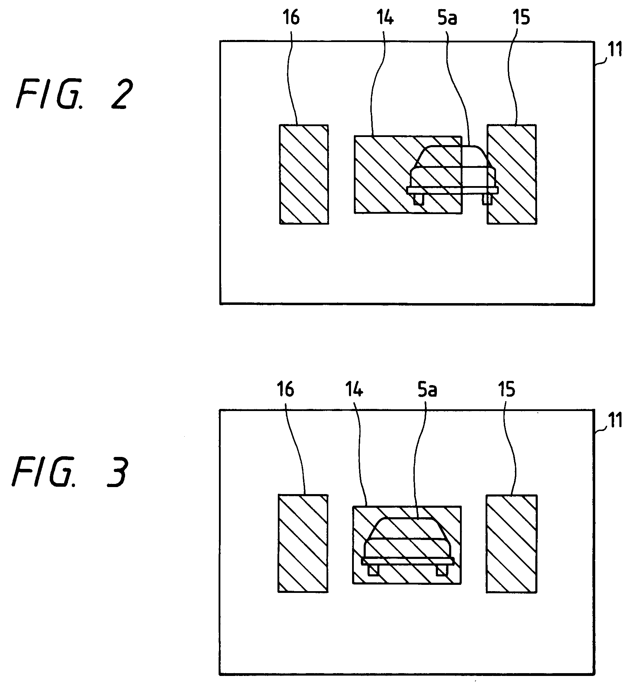

The operation will subsequently be described. Assuming the preceding car image 5a which should follow the image picked up by the upper image sensor 4 enters the display screen 11 where the first, the second and the third windows 14, 15, 16 are set and is displayed thereon as shown in Fig. 2, the driver steers his car in such a way as to move the preceding car image 5a to be completely held in the first window 14 by changing the relative position of his car to a preceding car 5.

If the driver turns on the image tracking instruction switch 13 when the preceding car image 5a is completely accommodated in the first window in this condition as shown in Fig. 3, the first window 14 will stubbornly accompany the movement of the preceding car image 5a however, diversely the latter moves. The function of tracking the preceding car image 5a is thus performed automatically by the first window 14.

As the first window 14 is moved to perform the image tracking function, the second window 15 and the third window 16 are also caused to move simultaneously.

The image tracking function described above is similar to those performed by the conventional apparatus as disclosed in Japanese Examined Patent Publication Nos. Sho-60-33352 (1985), and Hei-1-35305 (1989) and therefore the detailed description thereof will be omitted.

A description will subsequently be given of a method of detecting the distance between one's own car and the preceding one. First, the microcomputer 10 reads from the memory 9 a pixel signal in the first window 14 tracking the preceding car image 5a to make it a reference signal for computing the distance therebetween. The microcomputer 10 the selects an area corresponding to the first window 14 from the memory 8 in which the picture signal derived from the lower image sensor 3 has been stored and while sequentially shifting the picture signal in the memory 8 by a pixel each time with respect to the reference signal, step by step computes the total of the absolute value of the difference in signal type between the upper and the lower pixel in combination.

In other word, the position of an image best matching what is in the first window 14 is obtained by shifting one pixel at a time. The then area concerned in computation with resect to the reference signal in the first window 14 as shown in Fig. 4A is an area 17 corresponding to the position of the first window 14 with respect to the image of the memory 8 shown in Fig. 4B.

As set forth above, given $n$ pixel as the shift amount of the pixel when the total absolute value of the difference signal obtained by comparison the upper and the lower pixels becomes minimum; $p$

3

as the pixel pitch; L as the base length of the optical systems; f as the focal length of the lenses 1 and 2; and R as the distance up to the preceding car 5, the R is obtained from the following equation (1):

$$R = \frac{f \cdot L}{n\,p} \qquad \cdots\cdots (1)$$

Even though the preceding car 5 that has been fixedly set once moves to the left or right, it is tacked so that the distance of one's own car thereto may be obtained without interruption.

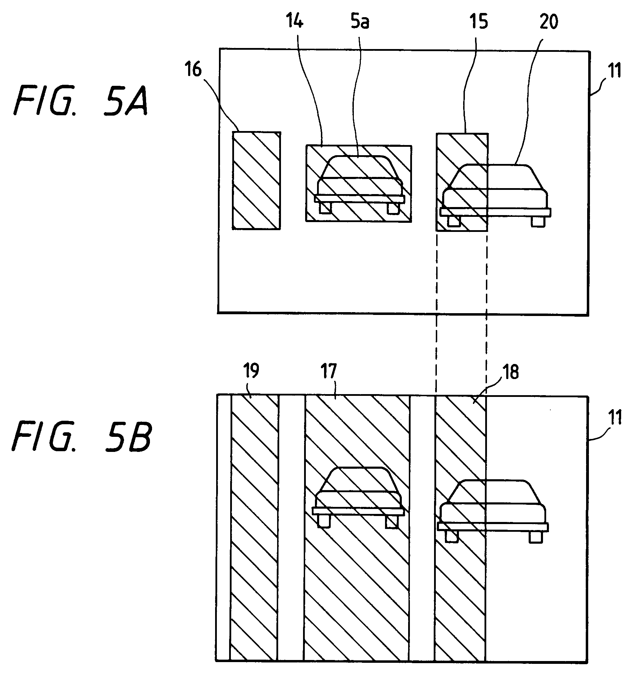

When another preceding car 20 is caught in the second window 15 as that car preceding one's own car on the next lane enters the visual fields of the image sensors 3 and 4 as shown in Fig. 5A, the microprocessor 10 selects an operation area 18 (Fig. 5B) of the picture in the memory 8, the operation area 18 corresponding to that in the second window 15 in the memory 9, with the picture signal in the second window 15 as a reference signal, obtains the position of an image best matching the image in the second window 15 in the operation area 18, and computes the distance between the additional preceding car and one's own car.

In this way, the distance to each preceding car can be detected even when a plurality of preceding cars are traveling.

The objects caught in the respective second and third windows 15, 16 adjacent to the first window 14 for tracking the picture of the preceding car 5 are, as shown in Fig. 5B, subjected to picture comparisons in the operation areas 18 and 19 respectively corresponding to the second and third windows 15 and 16. The distance to such an object can thus be measured on a window basis.

Although there have been set two of the windows 15 and 16 adjacent to the first window 14 in the embodiment shown, the number of windows may be increased when it is desired to keep a wide visual field ahead of one's own car under close observation.

Moreover, the size and shape of the window may be varied optionally in accordance with an object and are not limited to those defined in the embodiment shown.

As set forth above, according to the present invention, the preceding car image picked up by the image sensors for imaging the preceding car substantially using the pair of optical systems vertically arranged is display on the display means and the picture tracking device is used to track the preceding car image in the first window. The second window is set adjacent to the first window and, with the picture signals in these windows as the reference signals, the shifting of the upper picture signal from the corresponding lower one is detected so as to compute the distance between one's own car and the preceding car from window to window. Even while a plurality of cars are traveling ahead, a target preceding car is distinguished from the remaining ones and the distance to each of them is rendered detectable.

In addition, as the target preceding car image is always displayed, the driver is allowed to properly monitor which one of the preceding cars he keeps track of while detecting the distance thereto.

**Claims**

1. An apparatus for detecting a distance between one's own car and a preceding car, comprising:

   a pair of first and second image sensors, on which a image of said preceding car is formed by a pair of first and second optical systems vertically arranged, for outputting image signals of said preceding car image;

   display means for displaying said preceding car image picked up by said first image sensor;

   an image tracking device for tracking said preceding car image in a first window to be displayed on said display means; and

   distance computing means for detecting a displacement between the image signal displayed in said first window and another image signal formed by second image sensor to compute the distance between one's own car and said preceding car, and for detecting a displacement between a image signal of an object which is displayed in a second window adjacent to said first window and another image signal of the object formed by second image sensor to compute a distance to the object designated by the second window.

2. An apparatus as claimed in claim 1, further comprising:

   a pair of first and second analog-to-digital converters for digitalizing the image signals formed by said image sensors; and

   a pair of first and second memories for storing outputs of said converters, in which writing to and reading from said memories being controlled by said distance computing means.

3. An apparatus as claimed in claim 1, wherein the distance is obtained form the following equation;

$$R = \frac{f \cdot L}{d}$$

where R being the distance, f being focal length of the optical system, L being base length of the optical systems, and d being the displacement.

4. An apparatus as claimed in claim 1, wherein said second window comprises a plurality of windows.

FIG. 1

EP 0 473 945 A2

*FIG. 2*

*FIG. 3*

FIG. 4A

FIG. 4B

FIG. 5A

FIG. 5B

# FIG. 6